(19)

Europäisches
Patentamt
European
Patent Office
Office européen
des brevets

(11) **EP 4 571 465 A1**

(12) **EUROPEAN PATENT APPLICATION**
published in accordance with Art. 153(4) EPC

(43) Date of publication:
**18.06.2025 Bulletin 2025/25**

(21) Application number: **23851737.9**

(22) Date of filing: **05.08.2023**

(51) International Patent Classification (IPC):
*G06F 3/01* *(2006.01)*

(86) International application number:
**PCT/CN2023/111354**

(87) International publication number:
**WO 2024/032516 (15.02.2024 Gazette 2024/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.08.2022 CN 202210956666**

(71) Applicant: **Beijing Zitiao Network Technology Co.,
Ltd.
Beijing 100190 (CN)**

(72) Inventor: **WANG, Aoyu
Beijing 100028 (CN)**

(74) Representative: **Dentons UK and Middle East LLP
One Fleet Place
London EC4M 7WS (GB)**

(54) **INTERACTION METHOD AND APPARATUS FOR VIRTUAL OBJECT, AND DEVICE AND
STORAGE MEDIUM**

(57) The embodiments of the invention provide a method, apparatus, device and storage medium for virtual object interaction. The method includes detecting a gesture event for a presented scene, the scene including a plurality of virtual objects; selecting a plurality of interaction targets related to the detected gesture event from the plurality of virtual objects; and causing the plurality of interaction targets to respond to the gesture event with relative positions between the plurality of interaction targets being maintained. In this way, richer modes of object interaction can be achieved, and the interaction efficiency can be improved, thereby improving the user experience.

300

310
DETECT A GESTURE EVENT FOR A PRESENTED SCENE
COMPRISING A PLURALITY OF VIRTUAL OBJECTS

320
SELECT, FROM THE PLURALITY OF VIRTUAL OBJECTS, A PLURALITY
OF INTERACTION TARGETS RELATED TO THE GESTURE EVENT

330
CAUSE THE PLURALITY OF INTERACTION TARGETS TO RESPOND TO
THE GESTURE EVENT WITH RELATIVE POSITIONS BETWEEN THE
PLURALITY OF INTERACTION TARGETS BEING MAINTAINED

FIG. 3

EP 4 571 465 A1

## Description

This application claims the benefit of Chinese Application No. 2022109566669, entitled "METHOD, APPARATUS, DEVICE AND STORAGE MEDIUM FOR VIRTUAL OBJECT INTERACTION" filed on August 10, 2022, the entirety of which is incorporated herein by reference.

## FIELD

Example embodiments of the present disclosure generally relate to the field of computers, and in particular, to a method, apparatus, device and storage medium for virtual object interaction.

## BACKGROUND

Augmented Reality (AR) technology is a technology that fuses virtual information with the real world. In the process of applying the AR technology, virtual objects can be superimposed on a picture of the real world and presented in the AR scene. In this way, the image appearing in the field of view of users includes both the picture of the real world and the virtual objects, so that the users can simultaneously see the virtual objects and the real world. Further, the users may interact with the virtual objects presented in the AR scene through gestures. For example, when a plurality of virtual objects are presented in the AR scene, a user may select a single virtual object to drag, zoom, rotate the virtual object, and so on.

## SUMMARY

In a first aspect of the present disclosure, a method for virtual object interaction is provided. The method includes detecting a gesture event for a presented scene, the scene including a plurality of virtual objects; selecting a plurality of interaction targets related to the gesture event from the plurality of virtual objects; and causing the plurality of interaction targets to respond to the gesture event with relative positions between the plurality of interaction targets being maintained. In this way, richer modes of object interaction can be achieved and the interaction efficiency can be improved, thereby improving the user experience.

In a second aspect of the present disclosure, an apparatus for virtual object interaction is provided. The apparatus includes a gesture detection module configured to detect a gesture event for a presented scene, the scene including a plurality of virtual objects; a target selection module configured to select a plurality of interaction targets related to the gesture event from the plurality of virtual objects; and a gesture response module configured to cause the plurality of interaction targets to respond to the gesture event with relative positions between the plurality of interaction targets being maintained. In this way, richer modes of object interaction can be achieved and the interaction efficiency can be improved, thereby improving the user experience.

In a third aspect of the present disclosure, an electronic device is provided. The device includes at least one processing unit; and at least one memory coupled to the at least one processing unit and storing instructions for execution by the at least one processing unit. The instructions, when executed by the at least one processing unit, cause the device to perform the method according to the first aspect.

In a fourth aspect of the present disclosure, a computer-readable storage medium is provided. The computer readable storage medium stores a computer program, and the computer program is executable by a processor to implement the method according to the first aspect.

It would be appreciated that content described in this summary section is not intended to limit key features or important features of embodiments of the present disclosure, nor is it intended to limit the scope of the present disclosure. Other features of the present disclosure will be readily understood from the following description.

## BRIEF DESCRIPTION OF THE DRAWINGS

The above and other features, advantages and aspects of embodiments of the present disclosure will become more apparent with reference to the following detailed description and the accompanying drawings. In the drawings, the same or similar reference numerals denote the same or similar elements, wherein:

FIG. 1 illustrates a schematic diagram of an example environment in which embodiments of the present disclosure may be implemented;

FIG. 2 illustrates a schematic diagram of an architecture of virtual object interaction according to some embodiments of the present disclosure;

FIG. 3 illustrates a flowchart of a process for virtual object interaction according to some embodiments of the present disclosure;

FIG. 4 illustrates a schematic diagram of a gesture event for a scene according to some embodiments of the present disclosure;

FIGS. 5A to 5D show schematic diagrams of responses of virtual objects to the gesture event in the scene shown in FIG. 4;

FIG. 6 illustrates a schematic diagram of a plurality of interaction targets and positions of their reference point in a coordinate system;

FIG. 7 illustrates a schematic diagram of a user selection of a set of virtual objects of a plurality of virtual objects;

FIG. 8 illustrates a schematic diagram of grouping a plurality of virtual objects presented in a scene;

FIG. 9 illustrates a schematic diagram of a scene according to some embodiments of the present disclosure;

FIG. 10 illustrates a block diagram of an apparatus for virtual object interaction according to some embodiments of the present disclosure; and

FIG. 11 illustrates a block diagram of a device capable of implementing various embodiments of the present disclosure.

## DETAILED DESCRIPTION

Embodiments of the present disclosure will be described in more detail below with reference to the accompanying drawings. Although certain embodiments of the disclosure are illustrated in the drawings, it would be appreciated that the disclosure may be embodied in various forms and should not be construed as limited to the embodiments set forth herein. These embodiments are provided to provide a more thorough and complete understanding of the disclosure. It should be understood that the drawings and embodiments of the present disclosure are only used for example and are not intended to limit the protection scope of the present disclosure.

In the description of the embodiments of the present disclosure, the term "comprising" and similar terms thereof should be understood as open-ended inclusion, that is, "including but not limited to". The term "based on" should be understood to be "based at least in part on". The terms "one embodiment" or "the embodiment" should be understood as "at least one embodiment". The term "some embodiments" should be understood as "at least some embodiments". Other explicit and implicit definitions may also be included below.

As mentioned above, currently, in the field of virtual object interaction, when a plurality of virtual objects are presented in a scene, the user can only interact with a single virtual object and cannot interact with multiple virtual objects simultaneously. Thus, this interaction mode is monolithic, inefficient and affects the user experience.

The embodiments of the present disclosure provide a solution for virtual object interaction. In this solution, for a plurality of virtual objects in a presented scene, a plurality of interaction targets related to a gesture event can be selected from the plurality of virtual objects. While relative positions between the interaction targets are maintained, the interaction targets can be simultaneously interacted with, for example, the interaction targets can be placed, dragged, zoomed, rotated, and the like. In this way, richer modes of object interaction can be achieved and the interaction efficiency can be improved, thereby improving the user experience.

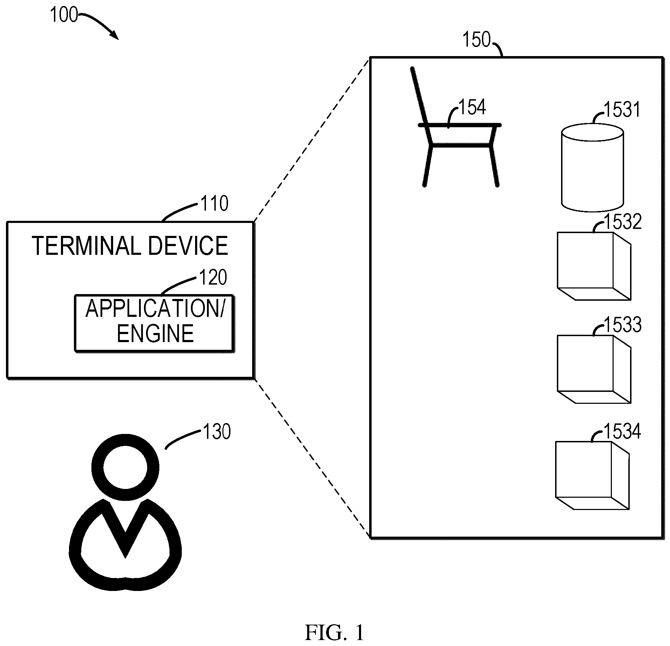

FIG. 1 illustrates a schematic diagram of an example environment 100 in which embodiments of the present disclosure may be implemented. In this example environment 100, a scene 150 is presented to a user 130 at or by a terminal device 110. The scene 150 includes objects 154, 1531, 1532, 1533, and 1534. The user 130 may interact with at least some of the objects 154, 1531, 1532, 1533, and 1534 through a predetermined gesture.

In some embodiments, as shown in FIG. 1, the scene 150 may be an AR scene. In the scene 150, the object 154 is a representation of a real object (in this example a chair) in the real world, such as an image or other forms of representation of the real object. The object 154 is also referred to herein as a 3D object for ease of discussion only. In some embodiments, the object 154 is interactive. For example, the size, orientation, display pixels, etc. of the object 154 may change in response to an input by the user 130. In some embodiments, the object 154 is non-interactive and presented in the scene 150 only for view of the users.

The objects 1531, 1532, 1533 and 1534 are virtual objects, and are specifically AR objects in this example. The objects 1531, 1532, 1533 and 1534 are used to represent cylinders and cubes, respectively, that may be placed on or near the chair. The objects 1531, 1532, 1533 and 1534 are interactive. For example, the size, orientation, color, etc. of the objects 1531, 1532, 1533 and 1534 may change in response to an input of the user 130.

It should be understood that scene 150 is merely exemplary and is not intended to limit the scope of the present disclosure. The scene 150 may include more or fewer objects, or may include other elements, such as user interface (UI) elements. In some embodiments, the scene 150 may be a virtual reality (VR) scene. The VR scene includes a plurality of virtual objects. The user may interact with the virtual objects presented in the VR scene.

The terminal device 110 may be any type of mobile terminal, fixed terminal, or portable terminal, including a mobile phone, desktop computer, laptop computer, notebook computer, netbook computer, tablet computer, media computer, multimedia tablet, gaming device, wearable device, personal communication system (PCS) device, personal navigation device, personal digital assistant (PDA), audio/video player, digital camera/camcorder, positioning device, television receiver, radio broadcast receiver, electronic book device, or any combination of the foregoing, including accessories and peripherals of these devices, or any combination thereof. In some embodiments, the terminal device 110 can also support any type of interface for a user (such as a "wearable" circuit).

An engine 120 is installed in the terminal device 110. The engine 120 is configured to drive the presentation of the scene 150. In some examples, the engine 120 may be an AR game engine, and accordingly, the scene 150 may be an AR game scene. In some embodiments, the engine 120 may be part of a content sharing application that is capable of providing multimedia content consumption-related services to the user 130, including browsing, commenting, forwarding, authoring (e.g., photographing and/or editing), posting, and the like of multimedia content. Accordingly, the scene 150 may be an AR content authoring scene.

It should be understood that the structure and functions of the environment 100 are described for exemplary purposes only and do not imply any limitation on the scope of the present disclosure. The terminal device 110 may include any suitable structure and function to implement the virtual object interaction according to the embodiments of the present disclosure.

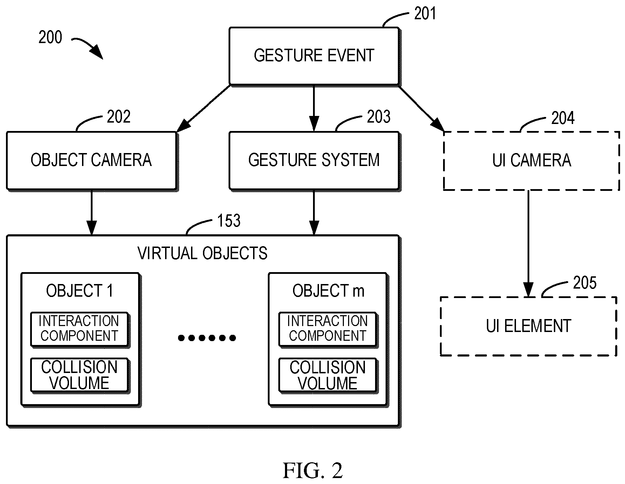

FIG. 2 illustrates a schematic diagram of an architecture 200 of virtual object interaction according to some embodiments of the present disclosure. As shown in FIG. 2, the architecture 200 includes a plurality of virtual objects 253-1 to 253-m, which are also collectively or individually referred to as virtual objects 253, where m is a positive integer greater than or equal to 2. Each virtual object 253 includes an interaction component and a collision volume. The collision volume defines a boundary of a respective virtual object in the presented scene 150. For example, the collision volume of virtual object 253-1 defines a boundary of the virtual object 253-1 in the scene 150. The interaction component is configured to change, under control of a gesture system 203, a presentation state of the virtual object in the scene 150, for example, a size, a position, and an orientation.

An object camera 202 is a virtual camera for monitoring the virtual object 253. When a gesture event 201 is received, the object camera 202 or a light projector associated with the object camera 202 may emit light. Based on monitoring of whether a ray intersects the collision volumes, whether the gesture event 201 hits a corresponding virtual object may be determined. Subsequently, the gesture system 203 may change the presentation state of the virtual object in the scene 150 according to whether the gesture event 201 hits the virtual object.

The gesture event 201 may include placing, drag, zoom, rotation, etc. The gesture event 201 may also include other types of gestures, which is not limited in the embodiments of the present disclosure.

In some embodiments, a UI element 205 (or referred to as a UI control) may also be presented in the scene 150 shown in FIG. 1. In such embodiments, as shown in FIG. 2, the architecture 200 also includes a UI camera 204. The UI camera 204 is a virtual camera for monitoring the UI element 205. When the gesture event 201 is received, the UI camera 204 or a ray projector associated with the UI camera 204 may emit a ray of light. Whether the gesture event 201 hits the UI element 205 may be determined based on monitoring of whether the ray intersects the UI element 205. Subsequently, depending on whether the gesture event 201 hits the UI element 205, a function corresponding to the UI element 205 may be triggered or a page corresponding to the UI element 205 may be presented.

The object camera 202, gesture system 203, UI camera 204, and interaction components and collision volumes of the virtual objects 253 in the architecture 200 may be implemented in the engine 120. The virtual objects 1531, 1532, 1533, 1534 shown in FIG. 1 may be part of a plurality of virtual objects 253-1 to 253-m. It should be understood that the architecture 200 described herein is merely exemplary and is not intended to limit the scope of the present disclosure. Any suitable functions and structures may be used to implement the virtual object interaction according to the embodiments of the present disclosure.

Some example embodiments of the present disclosure will be described below with continued reference to the accompanying drawings.

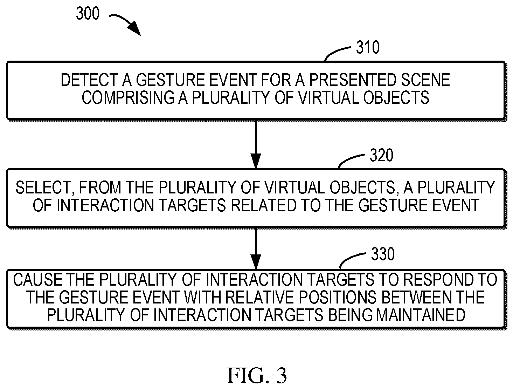

FIG. 3 illustrates a flowchart of a process 300 for virtual object interaction according to some embodiments of the present disclosure. The process 300 may be implemented at the terminal device 110. For ease of discussion, the process 300 will be described with reference to the environment 100 of FIG. 1 and the architecture 200 of FIG. 2.

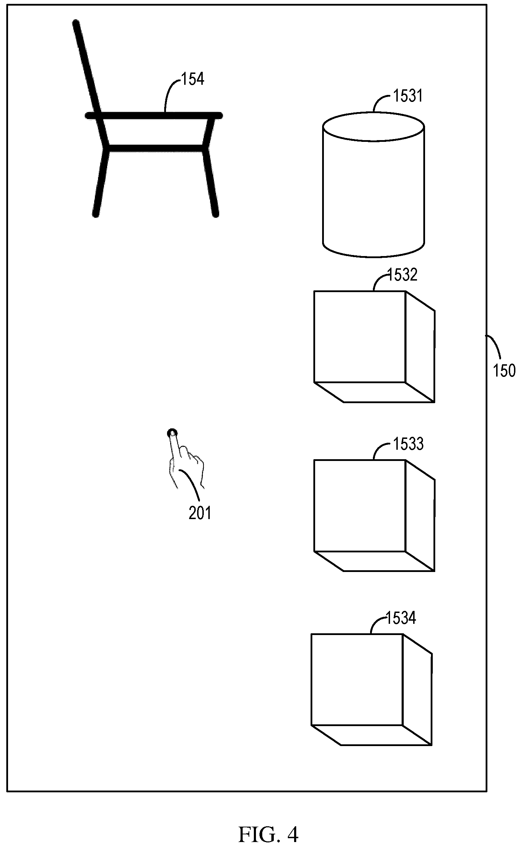

At block 310, the terminal device 110 detects a gesture event for the scene 150. FIG. 4 illustrates a schematic diagram of a gesture event 401 for the scene 150 according to some embodiments of the present disclosure. The gesture event 401 may be considered a specific implementation of the gesture event 201. As shown in FIG. 4, the scene 150 includes the 3D object 154 and the plurality of virtual objects 1531, 1532, 1533 and 1534. In some examples, the scene 150 may be presented on a screen of the terminal device 110. The user 130 may initiate the gesture event 401 by touching the screen. In other examples, the scene 150 may be presented in a real world space. The user 130 may initiate the gesture event 401 by making a gesture in the space. The terminal device 110 may detect that the gesture event 401 is related to multiple virtual objects among the virtual objects 1531, 1532, 1533 and 1534, and cause these virtual objects to respond to the gesture event 401.

At block 320, the terminal device 110 selects a plurality of interaction targets related to the gesture event from the plurality of virtual objects 1531, 1532, 1533 and 1534. The terminal device 110 may select the interaction target by using any suitable policy.

**EP 4 571 465 A1**

In some embodiments, if it is determined that the gesture event does not hit any virtual object among the plurality of virtual objects 1531, 1532, 1533 and 1534, the terminal device 110 determines these virtual objects as interaction targets. The gesture event not hitting any virtual object in the scene 150 means that the gesture event is used to operate on all of the virtual objects in the scene simultaneously. In this case, the terminal device 110 selects all of the virtual objects in the scene 150 as interaction targets. As shown in FIG. 4, the gesture event 401 does not hit any of virtual objects 1531, 1532 1533, and 1534, meaning that the gesture event 401 is used to operate on all of the virtual objects in the scene 150. In this case, the virtual objects 1531, 1532, 1533 and 1534 are simultaneously determined as the interaction targets.

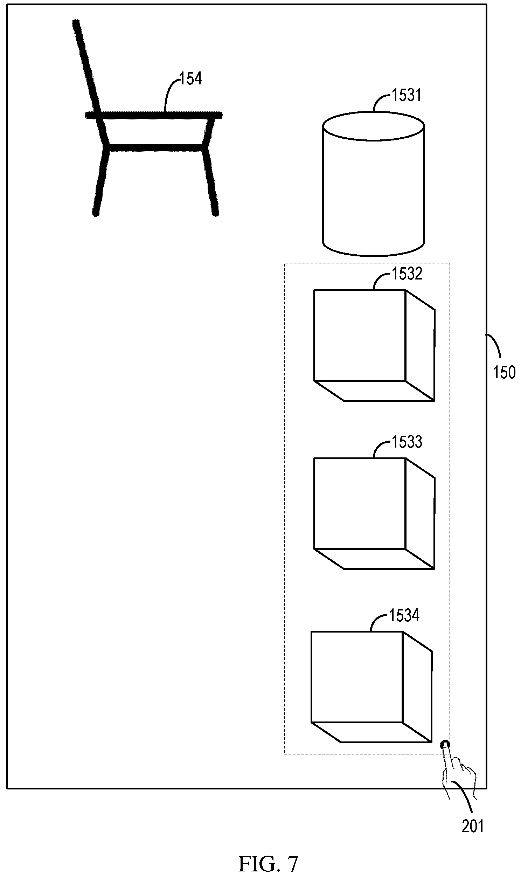

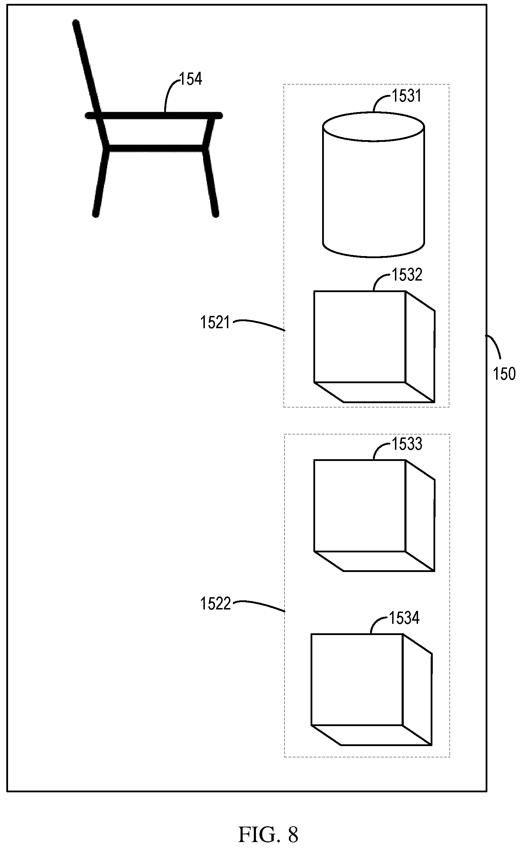

In some embodiments, the terminal device 110 may determine the interaction target based on a user selection for the virtual objects 1531, 1532, 1533 and 1534. These embodiments will be described below with reference to FIGS. 7 and 8.

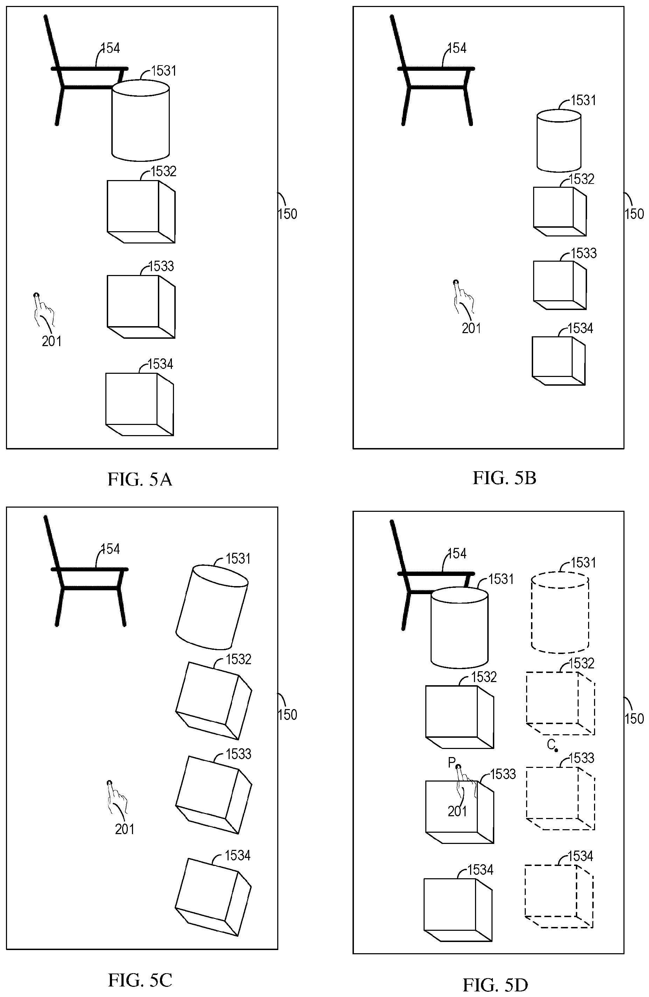

At block 330, the terminal device 110 causes the plurality of interaction targets to respond to the gesture event while maintaining the relative positions between the plurality of interaction targets. In other words, during the process of the plurality of interaction targets responding to the gesture event, the relative positions between the interaction targets are maintained. FIGS. 5A to 5D illustrate schematic diagrams of example responses of the virtual objects 1531, 1532, 1533 and 1534 to the gesture event 401 in the scene 150 shown in FIG. 4.

The example response shown in FIG. 5A is an object drag. With reference to FIG. 4 and FIG. 5A, when the gesture event 401 is a drag gesture, the terminal device 110 may simultaneously drag the virtual objects 1531, 1532, 1533 and 1534 from the position shown in FIG. 4 to the position shown in FIG. 5. During the drag process, the relative positions between the virtual objects 1531, 1532, 1533 and 1534 are maintained.

The example response shown in FIG. 5B is object scaling. With reference to FIG. 4 and FIG. 5B, when the gesture event 401 is a zoom gesture, the terminal device 110 may simultaneously zoom the virtual objects 1531, 1532, 1533 and 1534 from the state shown in FIG. 4 to the state shown in FIG. 5. During the scaling process, the relative positions between the virtual objects 1531, 1532, 1533 and 1534 are maintained. FIG. 5B illustrates the object zooming out as an example, and object zooming in may be implemented in a similar manner.

The example response shown in FIG. 5C is object rotation. With reference to FIG. 4 and FIG. 5C, when the gesture event 401 is a rotation gesture, the terminal device 110 may simultaneously rotate the virtual objects 1531, 1532, 1533 and 1534 from the orientation shown in FIG. 4 to the orientation shown in FIG. 5. During the rotation process, the relative positions between the virtual objects 1531, 1532, 1533 and 1534 are maintained.

The example response shown in FIG. 5D is object placement. For ease of understanding, positions of the virtual objects 1531, 1532, 1533 and 1534 before placement are shown in dashed lines in FIG. 5D.

If the terminal device 110 determines that the gesture event involves a placement operation, a reference point of the plurality of interaction targets and a position in the scene hit by the gesture event are determined. Based on the reference point and the determined position, the terminal device 110 may determine respective target positions of the plurality of interaction targets in the scene. Subsequently, the terminal device 110 may place the plurality of interaction targets at the target positions respectively.

As shown in FIG. 5D, the reference point of the virtual objects 1531, 1532, 1533 and 1534 before placement is the center point C of them, and the position of gesture event 401 in the scene 150 is point P. The point P is an object placement point. The terminal device 110 may determine the placement positions of the virtual objects 1531, 1532, 1533 and 1534 based on the coordinates of the point C and the point P.

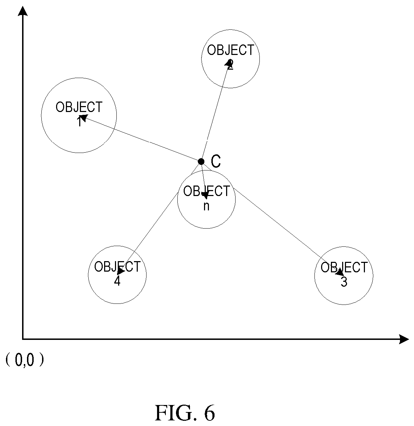

The determination of the coordinate of the center point C of the interaction targets is described with reference to FIG. 6. FIG. 6 illustrates a schematic diagram of a plurality of interaction targets and a position of their center point C in a coordinate system. FIG. 6 illustrates interaction targets 601-1, 601-2, 601-3, 601-4, ... , 601-n, which are also collectively referred to as interaction targets 601, where n is a positive integer greater than or equal to 2. The coordinate of each interaction target 601 in the coordinate system is X1, X2, ..., Xn. The coordinate Xc of the center point C of these interaction targets may be calculated following Formula (1).

$$Xc = \frac{1}{n} \sum_{1}^{n} X_i$$

(1)

Specifically, according to Formula (1), an average value of the coordinates X1, X2, ..., Xn of the interaction targets 601 may be calculated to obtain the coordinate Xc of the center point C, which represents the position of the center point C.

Continued reference is made to FIG. 5D. In FIG. 5D, there are four interaction targets, namely, the virtual objects 1531, 1532, 1533 and 1534 with coordinates X1, X2, X3, and X4, respectively. Therefore, the coordinate Xc of the center point C shown in FIG. 5D can be calculated by Formula (1).

The terminal device 110 determines a position of the scene 150 that is currently hit by the gesture event 401. For example, the object camera 202 shown in FIG. 2 may emit light, and an intersection point of the light and the scene 150 may be determined as the point P, and the coordinate Xp of the point P may be determined.

The target position of each interaction target shown in FIG. 5D may be represented by a corresponding coordinate *Xi'*, and the coordinate may be obtained through calculation by using Formula (2).

$$X_i^{'} = (X_i - Xc) + Xp$$

(2)

Specifically, according to Formula (2), the vector offset Xi-Xc of the coordinate Xi of each virtual object relative to the coordinate Xc of the center point C may be calculated first. Subsequently, each vector offset Xi-Xc may be added to the coordinate Xp of the point P, to obtain the coordinate *Xi'* of the target position of each interaction target.

The terminal device 110 may move each interaction target to a target position represented by the coordinate *Xi'*. In this way, during the object placement process, it is ensured that the relative positions between the interaction targets are maintained, and all the interaction targets would not be concentrated to the point P hit by the gesture event.

It should be understood that although the principle of the present disclosure is described above by using examples in which the center point C of multiple interaction targets is used as the reference point, any other point may also be used as the reference point to implement the placement of multiple virtual objects. For example, any point may be selected in the presented scene as a reference point, and its coordinate may be denoted as *Xref*. Subsequently, the vector offset Xi - Xref of the coordinate Xi of each virtual object relative to the coordinate Xref of the reference point may be calculated. Based on the vector offset, the coordinate *Xi'* of the target position of each interaction target may be calculated by using Formula (3) similar to Formula (2).

$$X_i^{'} = (X_i - X_{ref}) + Xp$$

(3)

Subsequently, the terminal device 110 may move each interaction target to the target position represented by the coordinate *Xi'*.

As described above with reference to block 320, in some embodiments, at block 320, the terminal device 110 may determine the interaction target based on the user selection. Further, in some embodiments, in response to receiving a user selection of a set of virtual objects in the plurality of virtual objects, the terminal device 110 may determine the set of virtual objects as the plurality of interaction targets. In other words, in one interaction, only one set of virtual objects in the scene 150 may need to be operated and other virtual objects are not to be operated. In this case, the terminal device 110 may receive the user selection of the set of virtual objects, and then determine the set of objects as the interaction targets. In these embodiments, the gesture event may immediately follow the user selection. That is, the user 130 may first select a set of virtual objects, and then the last interaction is only performed on the selected set of virtual objects.

FIG. 7 illustrates a schematic diagram of a user selection of a set of virtual objects of a plurality of virtual objects. As shown in FIG. 7, the virtual objects 1532, 1533 and 1534 in the scene 150 may be selected using a selection box 710. For example, the user 130 may provide the selection box 710 prior to initiating the gesture event 201. The virtual object included in selection box 710 is determined as the interaction target. In this example, at block 330 shown in FIG. 3, the terminal device 110 causes the virtual objects 1532, 1533, 1534 in the selection block 710 to respond to the gesture event 201 while maintaining the relative position between the set of virtual objects. For example, the terminal device 110 causes the set of virtual objects 1532, 1533 and 1534 to respond to the gesture event 201 in a manner similar to that described with reference to FIG. 5A to FIG. 5D, for example, performs the object drag, object zoom, object rotation, object placement, and the like. Specific interaction processes would not be described herein again.

It should be understood that, in other embodiments, a set of virtual objects in the plurality of virtual objects may be selected in any other manner, for example, by clicking. The virtual objects 1532, 1533 and 1534 in the scene 150 may be clicked one by one to form the set of virtual objects serving as the interaction targets for a subsequent gesture event. The scope of the present disclosure is not limited in terms of the selection of the virtual objects.

In some embodiments, the terminal device 110 may group the plurality of virtual objects based on a user selection of the plurality of virtual objects. With the grouping, users can interact with the group of virtual objects.

FIG. 8 illustrates a schematic diagram of grouping a plurality of virtual objects presented in a scene. As shown in FIG. 8, the terminal device 110 may group the virtual objects 1531, 1532, 1533 and 1534 into a first group 810 and a second group 820 based on a user selection of the plurality of virtual objects. The terminal device 110 may determine a group to which the virtual object targeted by the gesture event 201 belongs, and determine the virtual object in the determined group as the interaction target. For example, if the virtual object targeted by the gesture event 201 is the virtual object 1533, since the group to which the virtual object 1533 belongs is the second group 1522, virtual objects 1533 and 1534 in the second group 820 are determined as the interaction targets. At block 330 shown in FIG. 3, while maintaining the relative position between the virtual objects 1533 and 1534 in the second group 1522, the terminal device 110 causes the virtual objects 1533 and 1534 to respond to the gesture event 201. For example, the terminal device 110 causes the virtual objects 1533 and 1534 to respond to the gesture event 201 in a manner similar to that described with reference to FIG. 5A to FIG. 5D, for example, performs object dragging, object zooming, object rotation, object placement, and the like. Specific interaction processes would not be described herein again.

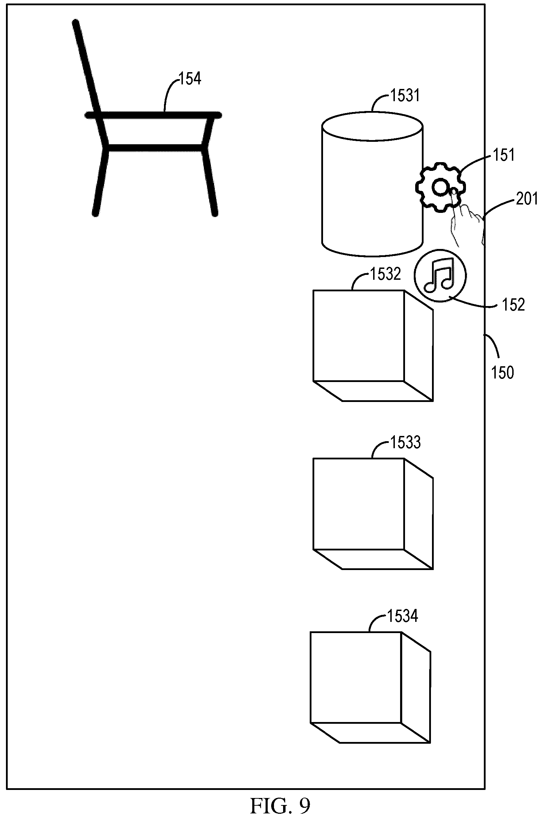

In some embodiments, in addition to the virtual object, the scene presented by the terminal device 110 may further include a UI element. The UI element may overlap with the virtual object. FIG. 9 illustrates a schematic diagram of a gesture event for a scene 950 according to some embodiments of the present disclosure. As shown in FIG. 9, compared to the scene 150, the scene 950 includes UI elements 151 and 152 in addition to the objects 154, 1531, 1532, 1533 and 1534. The UI element 151 is a settings control for setting a parameter of aspects of the scene 150. The UI element 152 is a music control for controlling the playing of music in the scene 150. The user 130 may set the scene 150 and control the music playback through the UI elements 151 and 152, and thus the UI elements 151 and 152 are interactive. The user 130 initiates a gesture event 901, which may be considered a specific implementation of the gesture event 201.

In these embodiments, at block 320, the terminal device 110 determines whether the gesture event involves (e.g., hits) a UI element in the scene, and selects a plurality of interaction targets from the plurality of virtual objects if it is determined that the gesture event does not involve (e.g., does not hit) any UI element. In other words, if the gesture event involves a UI element, the terminal device 110 performs a function corresponding to the UI element or presents a page corresponding to the UI element without selecting an interaction target from the virtual objects.

As shown in FIG. 9, if the terminal device 110 determines that the gesture event 901 does not involve the UI element 151 or 152, a plurality of interaction targets are selected from the virtual objects 1531, 1532, 1533 and 1534, and a specific selection manner may be performed in a manner similar to that described with reference to FIG. 4 to FIG. 8, and details are not described herein again. Conversely, if the terminal device 110 determines that the gesture event involves the UI element 151 or 152, the terminal device 110 will perform a function corresponding to the UI element 151 or 152 or present a page corresponding to the UI element 151 or 152 without selecting an interaction target from the virtual objects 1531, 1532, 1533 and 1534.

In these embodiments, mutual exclusion of the UI response and the virtual object responses is achieved. In this way, interaction confusion can be avoided, and the user experience is further improved.

In some embodiments, if the terminal device 110 detects a gesture event for a single virtual object in the plurality of virtual objects, the terminal device 110 may cause the single virtual object to respond to the gesture event. In this way, various objects in the plurality of virtual objects still can be operated independently.

Although the principles of the present disclosure are described above with reference to the AR scene, it should be understood that the embodiments of the present disclosure may also be used for virtual object interaction in the VR scene or any other scenes. The scope of the present disclosure is not limited in this regard.

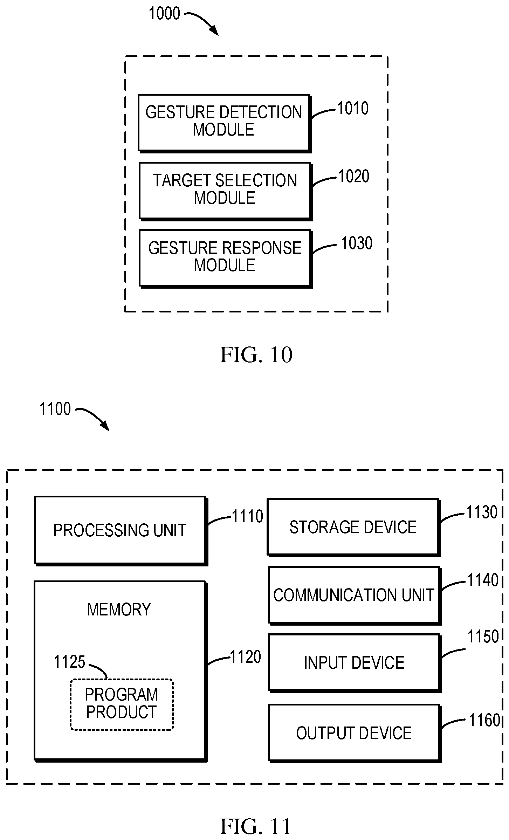

FIG. 10 illustrates a schematic structural block diagram of an apparatus 1000 for virtual object interaction according to some embodiments of the present disclosure. The apparatus 1000 may be implemented as or included in the terminal device 110. The various modules/components in the apparatus 1000 may be implemented by hardware, software, firmware, or any combination thereof.

As shown in the figure, the apparatus 1000 includes: a gesture detection module 1010 configured to detect a gesture event for a presented scene, the scene including a plurality of virtual objects; a target selection module 1020 configured to select a plurality of interaction targets related to the gesture event from the plurality of virtual objects; and a gesture response module 1030 configured to cause the plurality of interaction targets to respond to the gesture event with relative positions between the plurality of interaction targets being maintained.

In some embodiments, the target selection module 1020 is further configured to: in accordance with a determination that the gesture event does not hit a virtual object in the plurality of virtual objects, determine the plurality of virtual objects as the plurality of interaction targets.

In some embodiments, the target selection module 1020 is further configured to: in response to receiving a user selection of a set of virtual objects among the plurality of virtual objects, determine the set of virtual objects as the plurality of interaction targets.

In some embodiments, the target selection module 1020 is further configured to: group the plurality of virtual objects based on a user selection of the plurality of virtual objects; determine a group to which a virtual object targeted by the gesture event belongs; and determine virtual objects in the determined group as the plurality of interaction targets.

In some embodiments, the gesture response module 1030 is further configured to: in accordance with a determination that the gesture event involves a placement operation, determine a reference point of the plurality of interaction targets and a position in the scene hit by the gesture event; determine respective target positions of the plurality of interaction targets in the scene based on the reference point and the position; and respectively place the plurality of interaction targets at the target positions.

In some embodiments, the target selection module 1020 is further configured to: determine whether the gesture event relates to a user interface (UI) element in the scene; and in accordance with a determination that the gesture event does not relate to the UI element, select a plurality of interaction targets from the plurality of virtual objects.

In some embodiments, the scene comprises an augmented reality scene and the virtual objects comprise an augmented reality object.

FIG. 11 illustrates a block diagram of an electronic device 1100 in which one or more embodiments of the present disclosure may be implemented. It should be understood that the electronic device 1100 shown in FIG. 11 is merely exemplary and should not constitute any limitation on the function and scope of the embodiments described herein. The electronic device 1100 shown in FIG. 11 may be configured to implement the terminal device 110 in FIG. 1.

As shown in FIG. 11, the electronic device 1100 is in the form of a general-purpose computing device. Components of electronic device 1100 may include, but are not limited to, one or more processors or processing units 1110, a memory 1120, a storage device 1130, one or more communication units 1140, one or more input devices 1150, and one or more output devices 1160. The processing unit 1110 may be an actual or virtual processor capable of performing various processes according to a program stored in the memory 1120. In a multi-processor system, multiple processing units execute computer-executable instructions in parallel to improve the parallel processing capability of the electronic device 1100.

The electronic device 1100 typically includes a variety of computer storage media. The media may be any accessible media accessible to the electronic device 1100, including but not limited to volatile/non-volatile media, removable/non-removable media. The memory 1120 may be a volatile memory (e.g., a register, cache, random access memory (RAM)), non-volatile memory (e.g., read-only memory (ROM), electrically erasable programmable read-only memory (EEPROM), flash memory), or some combination thereof. The storage device 1130 may be a removable or non-removable medium, and may include a machine-readable medium, such as a flash drive, a magnetic disk, or any other medium, which may be capable of storing information and/or data (e.g., training data for training) and may be accessed within the electronic device 1100.

The electronic device 1100 may further include an additional removable/non-removable, volatile/non-volatile storage medium. Although not shown in FIG. 11, a magnetic disk drive for reading from or writing to a removable, non-volatile magnetic disk (e.g., a "floppy disk") and an optical disk drive for reading from or writing to a removable, non-volatile optical disk may be provided. In these cases, each drive may be connected to a bus (not shown) by one or more data media interfaces. The memory 1120 may include a computer program product 1125 having one or more program modules configured to perform various methods or acts of various embodiments of the present disclosure.

The communication unit 1140 communicates with another computing device by using a communication medium. Additionally, the functionality of the components of the electronic device 1100 may be implemented in a single computing cluster or multiple computing machines capable of communicating over a communication connection. Thus, the electronic device 1100 may operate in a networked environment using logical connections to one or more other servers, network personal computers (PCs), or another network node.

The input device 1150 may be one or more input devices, such as a mouse, keyboard, trackball, or the like. The output device 1160 may be one or more output devices, such as s display, speaker, printer, or the like. The electronic device 1100 may also communicate with one or more external devices (not shown) through the communication unit 1140 as needed. The external device such as a storage device, a display device, etc., communicates with one or more devices that enable a user to interact with the electronic device 1100, or with any device (e.g., a network card, a modem, etc.) that enables the electronic device 1100 to communicate with one or more other computing devices. The communication may be performed via an input/output (I/O) interface (not shown).

According to example implementations of the present disclosure, a computer-readable storage medium having computer-executable instructions stored thereon is provided. The computer-executable instructions are executed by a processor to implement the method described above. According to example implementations of the present disclosure, a computer program product tangibly stored on a non-transitory computer readable medium is further provided. The computer program product comprises computer executable instructions which are executed by a processor to implement the method described above.

Various aspects of the disclosure are described herein with reference to the flowchart and/or block diagrams of methods, apparatuses, devices, and computer program products implemented according to the disclosure. It should be understood that each block of the flowchart and/or block diagrams and combinations of blocks in the flowchart and/or block diagrams may be implemented by computer-readable program instructions.

These computer-readable program instructions may be provided to a processing unit of a general-purpose computer, special computer, or any other programmable data processing apparatus to produce a machine that generates an apparatus to implement the functions/acts specified in the one or more blocks in the flowchart and/or block diagrams when the instructions are executed by the processing unit of the computer or the other programmable data processing apparatus. These computer-readable program instructions may also be stored in a computer-readable storage medium that causes a computer, programmable data processing apparatus, and/or any other device to function in a particular manner, such that the computer-readable medium having instructions stored thereon includes an article of manufacture including instructions that implement various aspects of the functions/acts specified in the one or more blocks in the flowchart and/or block diagrams.

The computer-readable program instructions may be loaded onto a computer, any other programmable data processing apparatus, or any other device such that a series of operational steps are performed on the computer, other programmable data processing apparatus, or other device to produce a computer-implemented process. As such, the instructions that execute on the computer, other programmable data processing apparatus, or other device implement the functions/acts specified in the one or more blocks in the flowchart and/or block diagrams.

The flowchart and block diagrams in the drawings illustrate the architecture, functionality, and operations of possible implementations of systems, methods, and computer program products according to various implementations of the present disclosure. In this regard, each block in the flowchart or block diagrams may represent a module, a program segment, or a portion of instructions that contains one or more executable instructions for implementing the specified logical function(s). In some alternative implementations, the functions marked in the blocks may also occur in a different order than that marked in the drawings. For example, two consecutive blocks may actually be executed substantially in parallel, or sometimes they may be executed in a reverse order, depending on the functionality involved. It is also noted that each block in the block diagrams and/or flowchart, and the combination of blocks in the block diagrams and/or flowchart, may be implemented with a dedicated hardware-based system that performs the specified functions or actions, or may be implemented with a combination of a dedicated hardware and computer instructions.

Various implementations of the present disclosure have been described above, and the above description is exemplary, not exhaustive, and is not limited to the disclosed implementations. Many modifications and alterations will be apparent to those of ordinary skill in the art without departing from the scope and spirit of the illustrated implementations. The selection of terms as used herein is intended to best explain the principles of various implementations, practical applications or improvements to technology in the market, or to enable those of ordinary skill in the art to understand various implementations disclosed herein.

**Claims**

1. A method for virtual object interaction, comprising:

   detecting a gesture event for a presented scene, the scene comprising a plurality of virtual objects;
   selecting, from the plurality of virtual objects, a plurality of interaction targets related to the gesture event; and
   causing the plurality of interaction targets to respond to the gesture event with relative positions between the plurality of interaction targets being maintained.

2. The method of claim 1, wherein selecting the plurality of interaction targets comprises:
   in accordance with a determination that the gesture event does not hit any virtual object in the plurality of virtual objects, determining the plurality of virtual objects as the plurality of interaction targets.

3. The method of claim 1, wherein selecting the plurality of interaction targets comprises:
   in response to receiving a user selection of a set of virtual objects in the plurality of virtual objects, determining the set of virtual objects as the plurality of interaction targets.

4. The method of claim 1, wherein selecting the plurality of interaction targets comprises:

   grouping the plurality of virtual objects based on a user selection of the plurality of virtual objects;
   determining a group to which a virtual object targeted by the gesture event belongs; and
   determining virtual objects in the group as the plurality of interaction targets.

5. The method of claim 1, wherein causing the plurality of interaction targets to respond to the gesture event comprises:

   in accordance with a determination that the gesture event involves a placement operation, determining a reference point of the plurality of interaction targets and a position in the scene hit by the gesture event;
   determining respective target positions of the plurality of interaction targets in the scene based on the reference point and the position; and
   placing the plurality of interaction targets at the target positions respectively.

6. The method of claim 1, wherein selecting the plurality of interaction targets comprises:

determining whether the gesture event involves a user interface, UI, element in the scene; and

in accordance with a determination that the gesture event does not involve the UI element, selecting the plurality of interaction targets from the plurality of virtual objects.

7. The method of any of claims 1 to 6, wherein the scene comprises an augmented reality scene and the virtual objects comprise an augmented reality object.

8. An apparatus for virtual object interaction, comprising:

a gesture detection module configured to detect a gesture event for a presented scene, the scene comprising a plurality of virtual objects;

a target selection module configured to select, from the plurality of virtual object, a plurality of interaction targets related to the gesture event; and

a gesture response module configured to cause the plurality of interaction targets to respond to the gesture event with relative positions between the plurality of interaction targets being maintained.

9. The apparatus according to claim 8, wherein the gesture response module is further configured to:

in accordance with a determination that the gesture event involves a placement operation, determining a reference point of the plurality of interaction targets and a position in the scene hit by the gesture event;

determining respective target positions of the plurality of interaction targets in the scene based on the reference point and the position; and

placing the plurality of interaction targets at the target positions respectively.

10. An electronic device, comprising:

at least one processing unit; and

at least one memory coupled to the at least one processing unit and storing instructions for execution by the at least one processing unit, the instructions, when executed by the at least one processing unit, causing the device to perform the method according to any of claims 1 to 7.

11. A computer-readable storage medium having a computer program stored thereon, the computer program, when executed by a processor, implements the method according to any of claims 1 to 7.

FIG. 1

FIG. 2

300

310

┌─────────────────────────────────────────────────────────┐
│ DETECT A GESTURE EVENT FOR A PRESENTED SCENE            │
│ COMPRISING A PLURALITY OF VIRTUAL OBJECTS               │
└─────────────────────────────────────────────────────────┘

320

┌─────────────────────────────────────────────────────────┐
│ SELECT, FROM THE PLURALITY OF VIRTUAL OBJECTS, A PLURALITY │
│ OF INTERACTION TARGETS RELATED TO THE GESTURE EVENT     │
└─────────────────────────────────────────────────────────┘

330

┌─────────────────────────────────────────────────────────┐
│ CAUSE THE PLURALITY OF INTERACTION TARGETS TO RESPOND TO │
│ THE GESTURE EVENT WITH RELATIVE POSITIONS BETWEEN THE   │
│ PLURALITY OF INTERACTION TARGETS BEING MAINTAINED       │
└─────────────────────────────────────────────────────────┘

FIG. 3

FIG. 4

FIG. 5A

FIG. 5B

FIG. 5C

FIG. 5D

FIG. 6

FIG. 7

FIG. 8

FIG. 9

1000

GESTURE DETECTION
MODULE ⟋1010

TARGET SELECTION
MODULE ⟋1020

GESTURE RESPONSE
MODULE ⟋1030

FIG. 10

1100

PROCESSING UNIT ⟋1110

MEMORY

1125

PROGRAM
PRODUCT

⟋1120

STORAGE DEVICE ⟋1130

COMMUNICATION UNIT ⟋1140

INPUT DEVICE ⟋1150

OUTPUT DEVICE ⟋1160

FIG. 11

## INTERNATIONAL SEARCH REPORT

| International application No. |
| --- |
| **PCT/CN2023/111354** |

| | |
| --- | --- |
| **A.** | **CLASSIFICATION OF SUBJECT MATTER** |

G06F3/01(2006.01)i

According to International Patent Classification (IPC) or to both national classification and IPC

| | |
| --- | --- |
| **B.** | **FIELDS SEARCHED** |

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNABS; CNTXT; DWPI; SIPOABS; USTXT; CNKI; IEEE; 虚拟, 对象, 元素, 多个, 同时, 一起, 交互, 手势, 旋转, 缩放, 放大, 缩小, 移动, 拖, 拽; virtual, object, element, multiple, several, simultaneous, interact, gesture, rotate, zoom, enlarge, reduce, move, drag

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | CN 102542160 A (MICROSOFT CORP.) 04 July 2012 (2012-07-04) description, paragraphs 51-55 | 1-11 |
| X | CN 108446063 A (TENCENT TECHNOLOGY (SHENZHEN) CO., LTD.) 24 August 2018 (2018-08-24) description, paragraphs [0039]-[0077] | 1-11 |
| PX | CN 115328309 A (BEIJING BYTEDANCE NETWORK TECHNOLOGY CO., LTD.) 11 November 2022 (2022-11-11) description, paragraphs 22-69 | 1-11 |
| A | CN 112051961 A (FACEMON CO., LTD.) 08 December 2020 (2020-12-08) entire document | 1-11 |
| A | US 2013318479 A1 (AUTODESK, INC.) 28 November 2013 (2013-11-28) entire document | 1-11 |

☐ Further documents are listed in the continuation of Box C.     ☑ See patent family annex.

| | | | |
| --- | --- | --- | --- |
| \* | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **06 October 2023** | **23 October 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
| --- |
| **PCT/CN2023/111354** |

| Patent document cited in search report | | | Publication date (day/month/year) | Patent family member(s) | | | Publication date (day/month/year) |
| --- | --- | --- | --- | --- | --- | --- | --- |
| CN | 102542160 | A | 04 July 2012 | US | 2012157203 | A1 | 21 June 2012 |
|  |  |  |  | US | 8994718 | B2 | 31 March 2015 |
|  |  |  |  | CN | 102542160 | B | 28 October 2015 |
| CN | 108446063 | A | 24 August 2018 | CN | 108446063 | B | 27 July 2021 |
| CN | 115328309 | A | 11 November 2022 | None | | | |
| CN | 112051961 | A | 08 December 2020 | None | | | |
| US | 2013318479 | A1 | 28 November 2013 | None | | | |

Form PCT/ISA/210 (patent family annex) (July 2022)

**EP 4 571 465 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2022109566669